# EUROPÄISCHE PATENTSCHRIFT

(11) **EP 1 758 707 B1**
(45) Veröffentlichungstag und Bekanntmachung des Hinweises auf die Patenterteilung: **10.07.2013**
(21) Anmeldenummer: 05749931.1
(22) Anmeldetag: 06.05.2005
(51) Int. Cl.: B23K 26/42, F16B 17/00, B62D 23/00, B23K 26/24

(54) **VERFAHREN ZUM HERSTELLEN EINER RAHMENSTRUKTUR MIT MINDESTENS ZWEI HOHLPROFILELEMENTEN**
METHOD FOR THE PRODUCTION OF A FRAME STRUCTURE HAVING AT LEAST TWO HOLLOW PROFILE ELEMENTS
PROCEDE DE REALISATION D'UNE STRUCTURE DE CHASSIS AVEC AU MOINS DEUX ELEMENTS PROFILES CREUX

(30) Priorität: 24.05.2004 DE 102004025855
(43) Veröffentlichungstag der Anmeldung: 07.03.2007
(73) Patentinhaber: Wilhelm Karmann GmbH, 49084 Osnabrück (DE)
(72) Erfinder: WEISS, Lorenz, 40976 Osnabrück (DE); IMHORST, Tobias, 49170 Hagen a.T.W. (DE); SCHULZ, Robert, 49090 Osnabrück (DE); EXNER, Markus, 49191 Belm (DE)
(74) Vertreter: Kronthaler, Schmidt & Coll.
(86) Internationale Anmeldenummer: PCT/DE2005/000852
(87) Internationale Veröffentlichungsnummer: WO 2005/113189

(56) Entgegenhaltungen:
- WO-A-2004/041625
- DE-A1- 19 653 509
- US-A- 5 380 978
- US-A- 5 729 463
- US-A- 6 127 646
- US-B1- 6 302 478

## Beschreibung

Die Erfindung betrifft ein Verfahren zum Herstellen einer Rahmenstruktur mit mindestens zwei Hohlprofilelementen gemäß dem Oberbegriff des Anspruchs 1, wie es bspw. aus der US 6 302 478 bekannt ist.

Bei dem bekannten Verfahren werden zwei Hohlprofilelemente bspw. in Form eines T-Stoßes miteinander verschweißt, wobei in eines der Hohlprofilelemente im Bereich einer Verbindungsstelle ein Ausschnitt eingebracht wird, dessen Größe der Außenkontur eines zweiten Hohlprofilelements entspricht, und beide Teile werden im Bereich der Verbindungsstelle miteinander verschweißt. Aufgrund der unvermeidlichen Toleranzen, die bei der Herstellung der Hohlprofilelemente und der erforderlichen Ausschnitte im Bereich der Verbindungsstellen existieren, lassen sich die Schweißverbindungen nicht immer mit der erforderlichen Präzision und Festigkeit herstellen, so daß die bekannten Rahmenstrukturen in dieser Hinsicht noch verbesserungsbedürftig sind.

Die Aufgabe der Erfindung besteht darin, ein Verfahren zum Herstellen einer Rahmenstruktur mit mindestens zwei Hohlprofilelementen dahingehend zu verbessern, daß ein besonders kleiner Fügespalt im Bereich der Verbindungsstellen entsteht, um präzise Schweißverbindungen herstellen und insbesondere das Laserschweißverfahren einsetzen zu können.

Diese Aufgabe wird erfindungsgemäß durch ein Verfahren gemäß dem Anspruch 1 gelöst.

Es kann vorgesehen sein, daß die erste Teilstruktur aus einem Hohlprofilelement besteht, insbesondere einer A-Säule einer Kraftfahrzeugkarosserie, oder alternativ, daß sie aus mehreren zusammengeschobenen oder miteinander verschweißten Hohlprofilelementen besteht.

Insbesondere kann vorgesehen sein, daß die erste Teilstruktur eine A-Säule und einen Längsträger, oder eine A-Säule, einen vorderen und einen mittleren Längsträger einer Kraftfahrzeugkarosserie aufweist.

Die zweite Teilstruktur kann aus einem Hohlprofilelement bestehen, insbesondere einer B-Säule einer Kraftfahrzeugkarosserie. Alternativ kann die zweite Teilstruktur aus mehreren zusammengeschobenen oder miteinander verschweißten Hohlprofilelementen bestehen.

Die Erfindung sieht bevorzugt vor, daß die Verbindungsstellen mindestens einen T- oder I-Stoß und/oder einen Überlappstoß aufweisen.

Es kann vorgesehen sein, daß in Schritt f) die mindestens eine Verbindungsstelle mittels Laser beschnitten wird.

Es kann zweckmäßig sein, wenn vor dem Fügen auch die zweite Teilstruktur in einer vorgegebenen Montageposition fixiert wird.

Eine bevorzugte Ausführungsform der Erfindung zeichnet sich dadurch aus, daß aufeinanderfolgend mehrere Hohlprofilelemente aneinander anschließend in jeweils einer Montageposition fixiert werden, wobei jeweils mindestens eine Verbindungstoleranz bestimmt wird, daß mindestens eine Verbindungsstelle bearbeitet wird, falls die Verbindungstoleranz nicht innerhalb des erforderlichen Bereichs liegt, und daß die Hohlprofilelemente in ihrer Montageposition an den Verbindungsstellen laserverschweißt werden.

Zum Erreichen der gewünschten Zusammenbaupräzision sowie für die Qualität der Schweißverbindungen ist es günstig, wenn die Verbindungstoleranz maximal 0,2 mm und bevorzugt maximal 0,1 mm beträgt.

Die Rahmenstruktur kann ein Seitenwandmodul eines Kraftfahrzeugs, insbesondere eines Cabriolet-Fahrzeugs, sein.

Weitere Vorteile und Merkmale der Erfindung ergeben sich aus der nachfolgenden detaillierten Beschreibung eines Ausführungsbeispiels, wobei auf eine Zeichnung Bezug genommen wird, in der
- Fig. 1: eine auseinandergezogene Darstellung einer erfindungsgemäßen Rahmenstruktur mit ihren einzelnen Hohlprofilelementen zeigt,
- Fig. 2: eine vergrößerte Darstellung einer Verbindungsposition der Rahmenstruktur nach Fig. 1 zeigt,
- Fig. 3: eine schematische vertikale Schnittansicht entlang Linie III - III in Fig. 2 zeigt, und
- Fig. 4: eine schematische horizontale Schnittansicht entlang IV - IV in Fig. 2 zeigt.

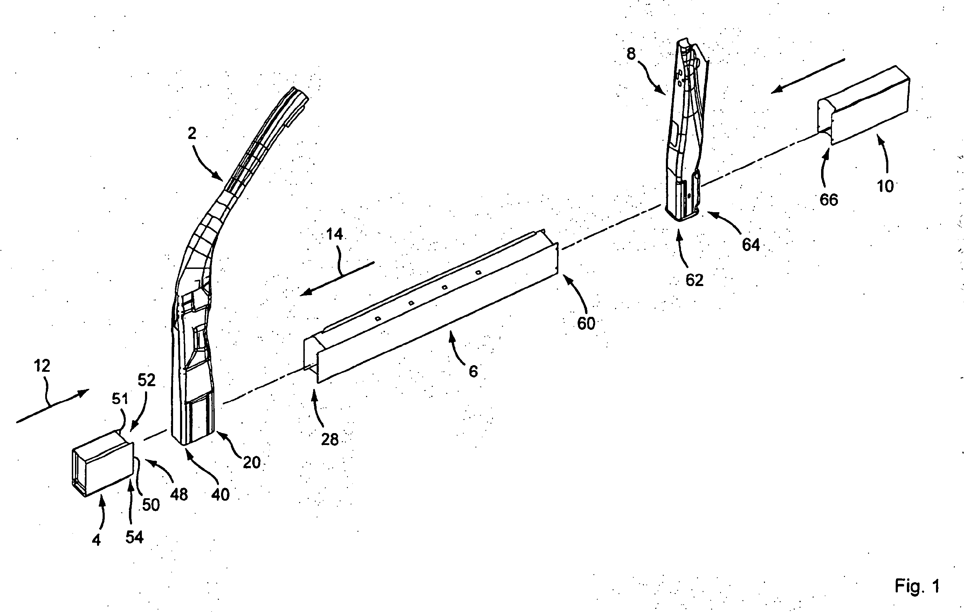

Das erfindungsgemäße Verfahren zum Herstellen einer Rahmenstruktur wird nachfolgend anhand der Zeichnungen beschrieben, wobei zunächst auf Fig. 1 Bezug genommen wird, in der eine A-Säule 2, ein vorderer Längsträger 4, ein mittlerer Längsträger 6, eine B-Säule 8 und ein hinterer Längsträger 10 schematisch dargestellt sind, wobei es sich um eine auseinandergezogene Darstellung der herzustellenden Rahmenstruktur handelt.

A-Säule 2 und B-Säule 8 sind in an sich bekannter Weise als Hohlprofilelemente hergestellt, bspw. als gerollte und/oder im Innenhochdruckumformungsverfahren (IHU) geformte Hohlprofilelemente, während es sich bei den Trägern 4, 6 und 10 um einfache Rollprofile handelt, die allerdings bedarfsweise ebenfalls im IHU-Verfahren umgeformt sein können.

Zunächst wird die A-Säule 2 mit Hilfe von nicht dargestellten Fixierlöchern und Aufnahmeflächen in einer Zusammenbauvorrichtung in einer genau vorgegebenen Position fixiert. Danach werden der vordere Längsträger 4 und der hintere Längsträger 6 auf die A-Säule 2 in Pfeilrichtung 12 bzw. 14 aufgeschoben und in der aufgeschobenen Stellung fixiert.

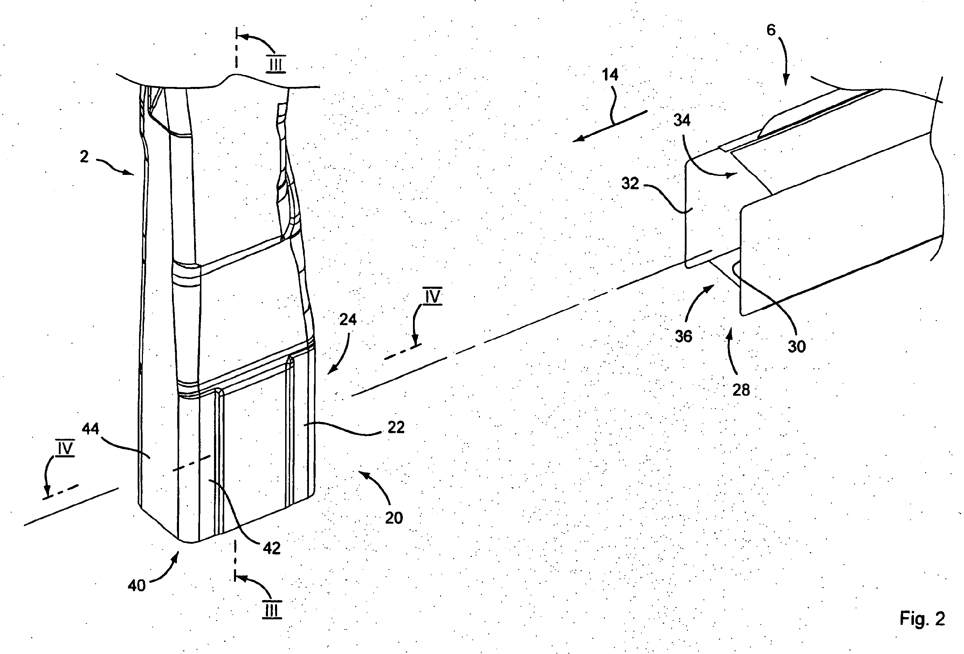

Fig. 2 erläutert in vergrößerter Darstellung den Aufschiebevorgang des mittleren Längsträgers 6 gegen die A-Säule 2 in Aufschieberichtung 14. Für die Herstellung der gewünschten lasergeschweißten Verbindung weist die A-Säule eine erste Verbindungsstelle 20 auf, die in diesem Fall aus zwei einander gegenüberliegenden seitlichen Verbindungsbereichen 22, wobei Fig. 2 nur einen davon zeigt, und aus einem hinteren Verbindungsbereich 24 besteht, der in Fig. 2 entgegen der Aufschieberichtung 14 weist. Die seitlichen Verbindungsbereiche 22 und der hintere Verbindungsbereich 24 werden jeweils durch Teile der Außenfläche des die A-Säule 2 bildenden Hohlprofilelements gebildet.

Eine zweite Verbindungsstelle 28 befindet sich an dem der A-Säule 2 zugekehrten vorderen Endabschnitt des mittleren Längsträgers 6 und besteht in dem dargestellten Beispiel aus zwei seitlichen Verbindungsbereichen 30, 32, die im aufgeschobenen Zustand die beiden seitlichen Verbindungsbereiche 22 der A-Säule 2 seitlich übergreifen bzw. überlappen, sowie aus einem oberen 34 und einem unteren Verbindungsbereich 36, die im aufgeschobenen Zustand nach Art eines T-Stoßes bündig oder mit geringem Abstand gegen den hinteren Verbindungsbereich 24 der A-Säule 2 anliegen.

Die Verbindung zwischen dem vorderen Längsträger 4 und der A-Säule 2 erfolgt in völlig analoger Weise, d.h. die A-Säule 2 weist auf ihrer dem vorderen Längsträger 4 zugekehrten Seite eine dritte Verbindungsstelle 40 auf, die entsprechend der ersten Verbindungsstelle 20 zwei seitliche 42 und einen vorderen Verbindungsbereich 44 aufweist, und der vordere Längsträger 4 weist an einer vierten Verbindungsstelle 48 (Fig. 1) seitliche 50, 51, obere 52 und untere Verbindungsbereiche 54 auf, die mit den seitlichen und vorderen Verbindungsbereichen 42, 44 der A-Säule zusammenwirken, wie in Fig. 1 und 2 angedeutet ist.

In entsprechender Weise wie vorstehend erläutert weist der mittlere Längsträger 6 an seinem hinteren Ende eine fünfte Verbindungsstelle 60 auf, die mit einer sechsten Verbindungsstelle 62 der B-Säule 8 zu verbinden ist, wobei die B-Säule 8 an ihrer hinteren Seite eine siebte Verbindungsstelle 64 aufweist, die mit einer achten Verbindungsstelle 66 des hinteren Längsträgers 10 zu verbinden ist. Die Paarungen fünfte/sechste Verbindungsstelle 60, 62 und siebte/achte Verbindungsstelle 64, 66 sind entsprechend wie die erste/zweite 20, 28 und dritte/vierte Verbindungsstelle 40, 48 durch überlappende und T-förmig aneinanderstoßende Bereiche der die Säulen bzw. Träger bildenden Hohlprofilelemente gebildet, so daß sie nachfolgend nicht im einzelnen beschrieben sind.

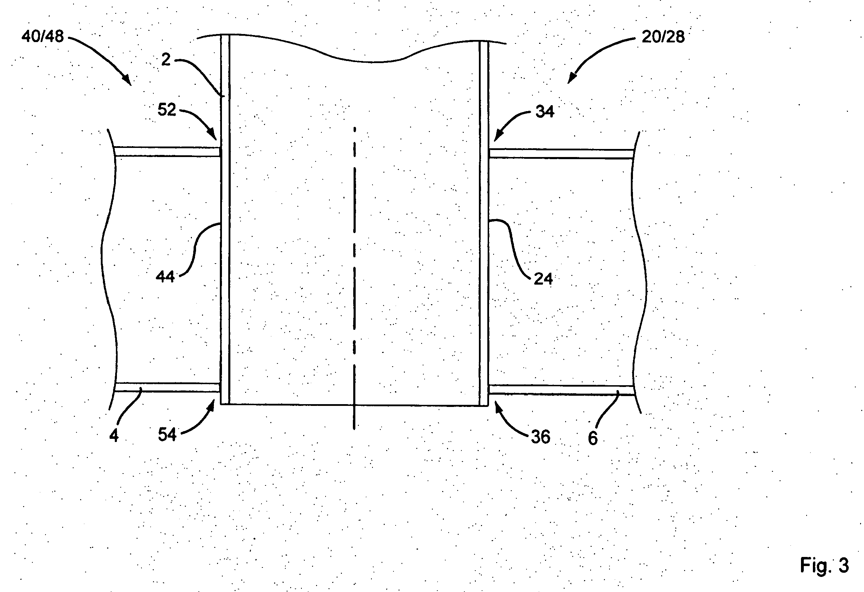

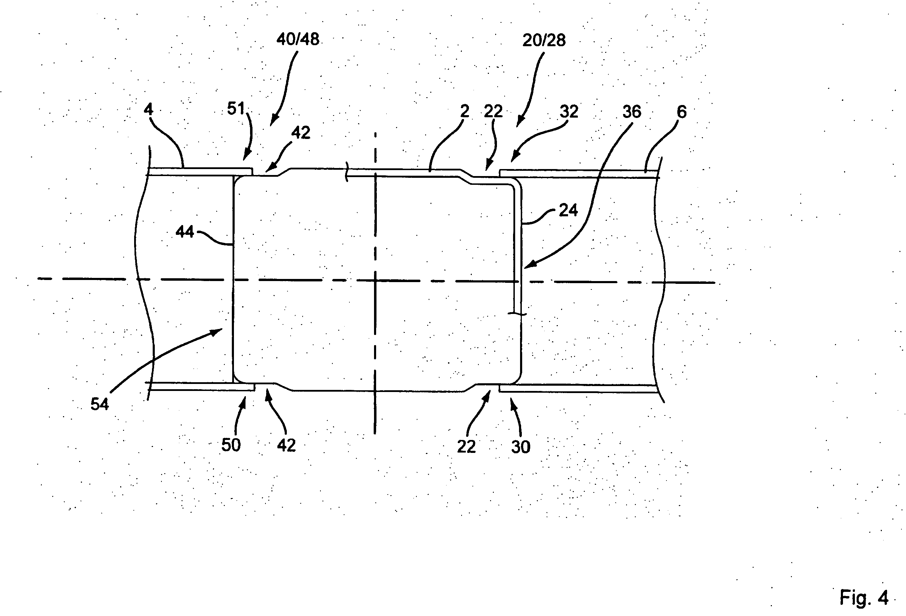

Fig. 3 zeigt in einer Schnittansicht entlang einer vertikalen Ebene und Fig. 4 in einer Schnittansicht entlang einer horizontalen Ebene den zusammengeschobenen Zustand von vorderem Längsträger 4, A-Säule 2 und mittlerem Längsträger 6 vor dem Verschweißen. Es ist deutlich zu erkennen, daß die oberen Verbindungsbereiche 34, 52 und die unteren Verbindungsbereiche 36, 54 des vorderen 4 und mittleren Längsträgers 6 praktisch spaltfrei gegen die hinteren 24 und vorderen Verbindungsbereiche 44 der A-Säule 2 anliegen (Fig. 3), während die seitlichen Verbindungsbereiche 30, 32 und 50, 51 überlappend an den seitlichen Verbindungsbereichen 22, 42 der A-Säule 2 anliegen und diese übergreifen, wobei ebenfalls kein oder praktisch kein Spalt auftritt.

Die Forderung, daß kein oder praktisch kein Spalt zwischen zwei Verbindungsstellen auftritt, d.h. vorliegend zwischen der ersten und zweiten Verbindungsstelle 20, 28 und der dritten und vierten Verbindungsstelle 40, 48 und hierbei zwischen den jeweils beteiligten Verbindungsbereichen, bedeutet im Rahmen der vorliegenden Erfindung, daß maximal eine Spaltbreite vorhanden sein darf, die eine anschließende Laserschweißverbindung der beteiligten Verbindungsbereiche ermöglicht, wobei eine für eine Laserschweißverbindung übliche Verbindungstoleranz 0,1 bis 0,2 mm beträgt. Zweckmäßigerweise ist vorgesehen, daß die Verbindungstoleranz maximal 0,3 mm, bevorzugt aber 0,1 bis 0,2 mm beträgt, so daß also der gegenseitige Abstand zwischen zwei zu verbindenden Verbindungsbereichen im zusammengeschobenen und lagegenau fixierten Zustand maximal der genannten Verbindungstoleranz entspricht. Ideal ist selbstverständlich ein nahezu oder vollständig verschwindender Spalt, d.h. ein Verbindungsbereich, der auf Passung gegen einen entsprechenden Verbindungsbereich aufgeschoben ist, mit dem er anschließend optimal durch Laserschweißen verbindbar ist.

Bei der dargestellten Verbindung des vorderen Längsträgers 4 mit der A-Säule 2 läßt sich die geforderte Verbindungstoleranz zwischen der dritten und vierten Verbindungsstelle 40, 48 in der Regel durch präzise Fertigung der A-Säule 2 einerseits und des vorderen Längsträgers 4 andererseits erreichen, d.h. normalerweise braucht weder die dritte noch die vierte Verbindungsstelle vor dem Verschweißen nachgearbeitet zu werden, um die erforderlichen Spalttoleranzen in der gewünschten bzw. geforderte Relativposition zwischen A-Säule und vorderem Längsträger 4 zu erhalten. Entsprechendes gilt für die erste und zweite Verbindungsstelle 20, 28 zwischen A-Säule 2 und mittlerem Längsträger 6.

Etwas anderes gilt in der Regel für die Verbindung im Bereich der fünften und sechsten Verbindungsstellen 60, 62 zwischen mittlerem Längsträger 6 und B-Säule 8, da die Fertigungspräzision für beide Säulen und mittleren Längsträger 6 in aller Regel nicht ausreicht, um nach Positionierung der drei Teile in ihrer geforderten Relativposition die notwendige Verbindungstoleranz (maximale Spaltbreite), wie oben erläutert, im Bereich der beteiligten Verbindungsbereiche einzuhalten. Um hier in jedem Falle die erforderliche Verbindungstoleranz zu gewährleisten, werden die miteinander zu verbindenden Teile, oder zumindest eines davon, in diesem Falle insbesondere der mittlere Längsträger 6, zunächst unter Einhaltung einer Maßtoleranz hergestellt, die gewährleistet, daß nach Zusammenschieben der Komponente 2, 6 und 8 gemäß Fig. 1 und 2, wobei dann die A- und B-Säule ihre gewünschten, festgelegten Positionen und ihre erforderliche Relativposition einnehmen, keinesfalls eine Spaltbreite im Bereich eines Verbindungsbereichs auftreten kann, die größer ist als eine für eine Laserverschweißung noch tolerierbare Spaltbreite, d.h. etwa 0,3 mm oder besser 0,2 oder 0,1 mm. Wenn sich beim Zusammenschieben der Teile in ihrer geforderten Relativposition herausstellt, daß zwischen der fünften und sechsten Verbindungsstelle 60, 62 zwischen mittlerem Längsträger 6 und B-Säule 8 ein Übermaß vorhanden ist, wird dieses abgetragen, bspw. durch Beschneidung mittels Laser, so daß hier gezielt eine hochpräzise Verbindungstoleranz mit einer maximalen Spaltbreite zwischen einander entsprechenden Verbindungsbereichen von bspw. 0,1 mm herstellbar ist.

Im konkreten Beispiel gemäß Fig. 1 und 2 wird so vorgegangen, daß die vorderen und mittleren Längsträger 4, 6 auf die in ihrer Position fixierte A-Säule 2 aufgeschoben und fixiert werden, wobei sie sogleich oder später durch Laserschweißen mit dieser verbunden werden. An den oberen und unteren Verbindungsbereichen wird jeweils ein T-Stoß mit einer minimalen Spaltbreite erzeugt, während die seitlichen Verbindungsbereiche eine Überlappsituation (Kehlnaht am Überlappstoß) bilden und einen Toleranzausgleich schaffen. Aufgrund der bündigen Blechanlage besteht auch hier eine Spaltbreite von nahezu Null.

Anschließend werden die fünften und sechsten Verbindungsstellen 60, 62 im Bereich der B-Säule 8 vermessen. Wenn die Spaltmaße bei Positionierung der B-Säule in der erforderlichen Relativposition zu A-Säule 2 und mittlerem Längsträger 6 akzeptabel sind, d.h. in der oben erläuterten Weise maximal 0,3 mm betragen, wird die B-Säule fest positioniert und mit dem mittleren Längsträger laserverschweißt. Anderenfalls werden die oberen und unteren Verbindungsbereiche am hinteren Ende des mittleren Längsträgers 6, die den oberen und unteren Verbindungsbereichen 34, 36 am vorderen Ende entsprechen, mittels Laser beschnitten. Erforderlichenfalls werden auch die seitlichen Verbindungsbereiche beschnitten. Anschließend wird die B-Säule wie oben beschrieben fixiert und laserverschweißt.

Es kann vorgesehen sein, daß zunächst sämtliche Einzelkomponenten 2, 4, 6, 8 und 10 nacheinander in der erforderlichen Position fixiert und ggf. vorher an einzelnen verbindungsbereichen beschnitten werden, und daß sämtliche die Laserschweißungen danach erfolgen, oder aber es kann schrittweise jedes Element nacheinander herangeschoben, vermessen, ggf. bearbeitet, fixiert und verschweißt werden.

**Bezugszeichenliste**

| | |
|---|---|
| 2 | A-Säule |
| 4 | vorderer Längsträger |
| 6 | mittlerer Längsträger |
| 8 | B-Säule |
| 10 | hinterer Längsträger |
| 12, 14 | Aufschieberichtung (von 4, 6) |
| 20 | erste Verbindungsstelle (von 2) |
| 22 | seitlicher Verbindungsbereich (von 2) |
| 24 | hinterer Verbindungsbereich (von 2) |
| 28 | zweite Verbindungsstelle (von 6) |
| 30, 32 | seitlicher Verbindungsbereich (von 6) |
| 34 | oberer Verbindungsbereich (von 6) |
| 36 | unterer Verbindungsbereich (von 6) |
| 40 | dritte Verbindungsstelle (von 2) |
| 42 | seitlicher Verbindungsbereich (von 2) |
| 44 | vorderer Verbindungsbereich (von 2) |
| 48 | vierte Verbindungsstelle (von 4) |
| 50, 51 | seitlicher Verbindungsbereich (von 4) |
| 52 | oberer Verbindungsbereich (von 4) |
| 54 | unterer Verbindungsbereich (von 4) |
| 60 | fünfte Verbindungsstelle (von 6) |
| 62 | sechste Verbindungsstelle (von 8) |
| 64 | siebte Verbindungsstelle (von 8) |
| 66 | achte Verbindungsstelle (von 10) |

## Patentansprüche

1. Verfahren zum Herstellen einer Rahmenstruktur mit mindestens zwei Hohlprofilelementen (2, 4, 6, 8, 10), mit den Schritten
a) Bereitstellen einer ersten Teilstruktur, die mindestens ein erstes Hohlprofilelement (2) und an diesem mindestens eine Verbindungsstelle (20, 40) aufweist, und Fixieren in einer vorgegebenen Montageposition,
b) Bereitstellen einer zweiten Teilstruktur, die mindestens ein zweites Hohlprofilelement (8) und an diesem mindestens eine weitere Verbindungsstelle (62, 64) aufweist,
c) Bestimmen mindestens einer Verbindungstoleranz zwischen mindestens einem Paar benachbarter Verbindungsstellen (20, 28; 40, 48; 60, 62),
d) Fügen der mindestens zwei Verbindungsstellen (20, 28; 60, 62) der mindestens einen Paar benachbachter Verbindungsstellen durch Laserschweißen,
**gekennzeichnet durch** die Schritte
e) Herstellen mindestens eines der Hohlprofilelemente (2, 4, 6, 8, 10) unter Einhaltung einer Fertigungspräzision bzw. Maßtoleranz, die gewährleistet, daß nach einer Positionierung zum Fügen gemäß Schritt d) der Hohlprofilelemente in eine geforderte Relativposition keinesfalls eine größere als für die Laserverschweißung tolerierbare, eine Verbindungstoleranz von maximal 0,3 mm ergebende Spaltbreite auftreten kann,
f) Bearbeiten mindestens einer Verbindungsstelle (28; 60), wenn die Verbindungstoleranz in der geforderten Relativposition der ersten und zweiten Teilstruktur nicht in einem für Laserschweißen üblichen Bereich liegt, um die Verbindungstoleranz innerhalb dieses Bereichs zu bringen, und
g) Fixieren der zweiten Teilstruktur in einer vorgegebenen Montageposition und der geforderten Relativposition bezüglich des Hohlprofilelemente (2, 4, 6) der ersten Teilstruktur vor dem Fügen gemäß Schritt d).

2. Verfahren nach Anspruch 1, **dadurch gekennzeichnet, daß** die erste Teilstruktur aus einem Hohlprofilelement (2) besteht, insbesondere einer A-Säule einer Kraftfahrzeugkarosserie.

3. Verfahren nach Anspruch 1, **dadurch gekennzeichnet, daß** die erste Teilstruktur aus mehreren zusammengeschobenen oder miteinander verschweißten Hohlprofilelementen (2, 4, 6) besteht.

4. Verfahren nach Anspruch 3, **dadurch gekennzeichnet, daß** die erste Teilstruktur eine A-Säule (2) und einen Längsträger (6) einer Kraftfahrzeugkarosserie aufweist.

5. Verfahren nach Anspruch 3, **dadurch gekennzeichnet, daß** die erste Teilstruktur eine A-Säule (2), einen vorderen (4) und einen mittleren Längsträger (6) einer Kraftfahrzeugkarosserie aufweist.

6. Verfahren nach einem der vorangehenden Ansprüche, **dadurch gekennzeichnet, daß** die zweite Teilstruktur aus einem Hohlprofilelement (8) besteht, insbesondere einer B-Säule einer Kraftfahrzeugkarosserie.

7. Verfahren nach einem der Ansprüche 1 bis 5, **dadurch gekennzeichnet, daß** die zweite Teilstruktur aus mehreren zusammengeschobenen oder miteinander verschweißten Hohlprofilelementen (8, 10) besteht.

8. Verfahren nach einem der vorangehenden Ansprüche, **dadurch gekennzeichnet, daß** die Verbindungsstellen mindestens einen T-oder I-Stoß und/oder einen Überlappstoß aufweisen.

9. Verfahren nach einem der vorangehenden Ansprüche, **dadurch gekennzeichnet, daß** in Schritt d) die mindestens eine Verbindungsstelle mittels Laser beschnitten wird.

10. Verfahren nach einem der vorangehenden Ansprüche, **dadurch gekennzeichnet, daß** vor dem Fügen auch die zweite Teilstruktur in einer vorgegebenen Montageposition fixiert wird.

11. Verfahren nach einem der vorangehenden Ansprüche, **dadurch gekennzeichnet, daß** aufeinanderfolgend mehrere Hohlprofilelemente (2, 4, 6, 8, 10) aneinander anschließend in jeweils einer Montageposition fixiert werden, wobei jeweils mindestens eine Verbindungstoleranz bestimmt wird, daß mindestens eine Verbindungsstelle bearbeitet wird, falls die Verbindungstoleranz nicht innerhalb des erforderlichen Bereichs liegt, und daß die Hohlprofilelemente in ihrer Montageposition an den Verbindungsstellen laserverschweißt werden.

12. Verfahren nach einem der vorangehenden Ansprüche, **dadurch gekennzeichnet, daß** die Verbindungstoleranz maximal 0,2 mm und bevorzugt mindestens 0,1 mm beträgt.

13. Verfahren nach einem der vorangehenden Ansprüche, **dadurch gekennzeichnet, daß** die Rahmenstruktur ein Seitenwandmodul eines Kraftfahrzeugs, insbesondere eines Cabriolet-Fahrzeugs, ist.

## Claims

1. A method for the production of a frame structure having at least two hollow profile elements (2, 4, 6, 8, 10), said method comprising the steps of
a) providing a first partial structure, which comprises at least one first hollow profile element (2) with at least one connecting point (20, 40) thereon, and fixing it in a predetermined assembly position,
b) providing a second partial structure, which comprises at least one second hollow profile element (8) with at least one further connecting point (62, 64) thereon,
c) determining at least one connection tolerance between at least one pair of adjacent connecting points (20, 28; 40, 48; 60, 62),
d) joining the at least two connecting points (20, 28; 60, 62) of the at least one pair of adjacent connecting points by laser welding,
**characterised by** the steps of
e) producing at least one of the hollow profile elements (2, 4, 6, 8, 10) while observing a precision in manufacture or a dimensional tolerance which ensures that, after positioning of the hollow profile elements in a required relative position for the joining operation of step d), there is never a gap width exceeding that which is tolerable for laser welding, to result in a maximum connection tolerance of 0.3 mm,
f) processing at least one connecting point (28; 60), in case the connection tolerance in the required relative position of the first and second partial structures is not within the range considered as normal for laser welding in order to reach a connection tolerance that falls within said range, and
g) fixing the second partial structure in a predetermined assembly position and the required relative position with respect to the hollow profile element (2, 4, 6) of the first partial structure before carrying out the joining operation of step d).

2. The method according to claim 1, **characterised in that** the first partial structure consists of a hollow profile element (2), in particular an A pillar of a motor vehicle body.

3. The method according to claim 1, **characterised in that** the first partial structure consists of a plurality of hollow profile elements (2, 4, 6) inserted into one another or welded together.

4. The method according to claim 3, **characterised in that** the first partial structure comprises an A pillar (2) and a longitudinal member (6) of a motor vehicle body.

5. The method according to claim 3, **characterised in that** the first partial structure comprises an A pillar (2), a front longitudinal member (4) and a central longitudinal member (6) of a motor vehicle body.

6. The method according to any one of the preceding claims, **characterised in that** the second partial structure consists of a hollow profile element (8), in particular a B pillar of a motor vehicle body.

7. The method according to any one of claims 1 to 5, **characterised in that** the second partial structure consists of a plurality of hollow profile elements (8, 10) inserted into one another or welded together.

8. The method according to any one of the preceding claims, **characterised in that** the connecting points comprise at least a T-joint or a I-joint and/or a lap joint.

9. The method according to any one of the preceding claims, **characterised in that** the at least one connecting point is trimmed by means of a laser in step d).

10. The method according to any one of the preceding claims, **characterised in that**, prior to joining, the second partial structure is also fixed in a predetermined assembly position.

11. The method according to any one of the preceding claims, **characterised in that** several hollow profile elements (2, 4, 6, 8, 10) are each sequentially fixed end-to-end in an assembly position, determining at least one connection tolerance in each case, **in that** at least one connecting point is processed, if the connection tolerance is not within the required range, and **in that** the hollow profile elements are laser-welded at the connecting points in their assembly position.

12. The method according to any one of the preceding claims, **characterised in that** the connection tolerance is no more than 0.2 mm and preferably at least 0.1 mm.

13. The method according to any one of the preceding claims, **characterised in that** the frame structure is a side wall module of a motor vehicle, in particular a convertible vehicle.

## Revendications

1. Procédé de réalisation d'une structure de châssis avec au moins deux éléments profilés creux (2, 4, 6, 8, 10), ledit procédé comprenant les étapes suivantes :
a) réalisation d'une première structure partielle, qui comprend au moins un premier élément profilé creux (2) avec au moins un point de jonction (20, 40) sur celui-ci, et fixation dans une position de montage prédéfinie,
b) réalisation d'une deuxième structure partielle, qui comprend au moins un deuxième élément profilé creux (8) avec au moins un point de jonction additionnel (62, 64) sur celui-ci,
c) détermination d'au moins une tolérance de jonction entre au moins une pair de points de jonction adjacents (20, 28; 40, 48; 60, 62),
d) assemblage desdits au moins deux points de jonction (20, 28; 60, 62) de ladite au moins une paire de points de jonction adjacents par soudage laser,
**caractérisé par** les étapes suivantes :
e) réalisation d'au moins un des éléments profilés creux (2, 4, 6, 8, 10) tout en respectant une précision de production ou une tolérance dimensionnelle garantissant qu'après le positionnement des éléments profilés creux dans une position relative demandée pour l'assemblage selon l'étape d), la largeur d'entrefer ne sera jamais supérieure à celle qui est tolérable pour le soudage laser et qui donne une tolérance de jonction maximale de 0.3 mm,
f) usinage d'au moins un point de jonction (28; 60), en cas que la tolérance de jonction dans la position relative requise entre la première et la deuxième structure partielle ne soit pas dans une plage considérée normale pour le soudage laser, afin d'atteindre une tolérance de jonction qui soit dans ladite plage, et
g) fixation de la deuxième structure partielle dans une position de montage prédéfinie et de la position relative demandée par rapport à l'élément profilé creux (2, 4, 6) de la première structure partielle avant l'assemblage selon l'étape d).

2. Procédé selon la revendication 1, **caractérisé en ce que** la première structure partielle est constituée d'un élément profilé creux (2), notamment d'un montant A d'une carrosserie automobile.

3. Procédé selon la revendication 1, **caractérisé en ce que** la première structure partielle est constituée de plusieurs éléments profilés creux (2, 4, 6) insérés les uns dans les autres ou soudés les uns aux autres.

4. Procédé selon la revendication 3, **caractérisé en ce que** la première structure partielle comprend un montant A (2) et un support longitudinal (6) d'une carrosserie automobile.

5. Procédé selon la revendication 3, **caractérisé en ce que** la première structure partielle comprend un montant A (2), un support longitudinal avant (4) et un support longitudinal central (6) d'une carrosserie automobile.

6. Procédé selon l'une quelconque des revendications précédentes, **caractérisé en ce que** la deuxième structure partielle est constituée d'un élément profilé creux (8), notamment d'un montant B d'une carrosserie automobile.

7. Procédé selon l'une quelconque des revendications 1 à 5, **caractérisé en ce que** la deuxième structure partielle est constituée de plusieurs éléments profilés creux (8, 10) insérés les uns dans les autres ou soudés les uns aux autres.

8. Procédé selon l'une quelconque des revendications précédentes, **caractérisé en ce que** les points de jonction comprennent au moins un joint en T ou un joint en I et/ou un joint de recouvrement.

9. Procédé selon l'une quelconque des revendications précédentes, **caractérisé en ce que** l'au moins un point de jonction est coupé par laser à l'étape d).

10. Procédé selon l'une quelconque des revendications précédentes, **caractérisé en ce que** l'on fixe également la deuxième structure partielle dans une position de montage prédéfinie avant l'assemblage.

11. Procédé selon l'une quelconque des revendications précédentes, **caractérisé en ce que** l'on fixe plusieurs éléments profilés creux (2, 4, 6, 8, 10), disposés les uns derrière les autres de manière adjacente, dans une position de montage respective, déterminant à chaque fois au moins une tolérance de jonction, **en ce que** l'on usine au moins un point de jonction en cas que la tolérance de jonction ne soit pas dans la plage requise, et **en ce que** les éléments profilés creux sont soudés par laser aux points de jonction dans leur position de montage.

12. Procédé selon l'une quelconque des revendications précédentes, **caractérisé en ce que** la tolérance de jonction est de 0.2 mm au maximum et de préférence d'au moins 0.1 mm.

13. Procédé selon l'une quelconque des revendications précédentes, **caractérisé en ce que** la structure de châssis est un module de paroi latérale pour un véhicule automobile, notamment pour un véhicule cabriolet.
